# EUROPEAN PATENT SPECIFICATION

(11) **EP 2 243 331 B1**
(45) Date of publication and mention of the grant of the patent: **21.09.2011**
(21) Application number: 08869159.7
(22) Date of filing: 15.12.2008
(51) Int. Cl.: H04W 76/02, H04W 80/04, H04W 88/02, H04W 88/16

(54) **MULTI-PDN (PACKET DATA NETWORK) CONNECTIVITY TO ONE APN (ACCESS POINT NAME)**
KONNEKTIVITÄT MEHRERER PDN (PAKETDATENNETZWERKE) MIT EINEM APN (ZUGANGSPUNKTNAMEN)
CONNECTIVITÉ MULTI-RÉSEAU DE DONNÉES EN PAQUETS (PDN) AVEC UN NOM DE POINT D'ACCÈS (APN)

(30) Priority: 27.12.2007 US 16858
(43) Date of publication of application: 27.10.2010
(73) Proprietor: Telefonaktiebolaget LM Ericsson (publ), 164 83 Stockholm (SE)
(72) Inventor: ROMMER, Stefan, S-426 74 Västra Frölunda (SE); SÖRENSEN, Johan, S-211 37 Malmö (SE)
(74) Representative: Althoff, Fredrik
(86) International application number: PCT/EP2008/067544
(87) International publication number: WO 2009/083429

(56) References cited:
- EP-A- 1 804 434
- US-A1- 2007 291 670
- 3GPP: "3rd Generation Partnership Project; Technical Specification Group Services and System Aspects; Architecture enhancements for non-3GPP accesses (Release 8)" 3GPP TS 23.402 V8.0.0 (2007-12), [Online] December 2007 (2007-12), pages 1-131, XP002525736 Retrieved from the Internet: URL:http:// www.3gpp.org> [retrieved on 2009-04-27]
- ERICSSON: "3GPP TSG SA WG2 MEETING #65; APN Decoration; S2-083282" 3GPP TSG SA WG2 MEETING #65, [Online] 12 May 2008 (2008-05-12), - 16 May 2008 (2008-05-16) pages 1-2, XP002525737 Prague Retrieved from the Internet: URL:http://www.3gpp.org/ftp/tsg_sa/WG2_Arc h/TSGS2_65_Prague/docs/?C=M;O=A> [retrieved on 2009-04-27]
- ERICSSON: "3GPP TSG SA WG2 MEETING #65; Multi-PDN connectivity to one APN in 23.402; S2-083283" 3GPP TSG SA WG2 MEETING #65, [Online] 12 May 2008 (2008-05-12), - 16 May 2008 (2008-05-16) pages 1-9, XP002525738 Munich Retrieved from the Internet: URL:http://www.3gpp.org/ftp/tsg_sa/WG2_Arc h/TSGS2_65_Prague/docs/?C=M;O=A> [retrieved on 2009-04-27]
- ERICSSON: "3GPP TSG SA WG2 MEETING #63; TE PDN connectivity; S2-081363" 3GPP TSG SA WG2 MEETING #63, [Online] 18 February 2008 (2008-02-18), - 22 February 2008 (2008-02-22) pages 1-2, XP002525739 Athens Retrieved from the Internet: URL:http://www.3gpp.org/ftp/tsg_sa/WG2_Arc h/TSGS2_63_Athens/Docs/?C=M;O=A> [retrieved on 2009-04-27]

## Description

### TECHNICAL FIELD

The present invention relates to a solution for handling several primary packet data network connections towards one access point name in a telecommunications network.

### BACKGROUND

The current evolution of telecommunication solutions, the concept of packet based communication in a wireless environment is widely finding acceptance. The 3GPP group is currently working on Release 8 of it's standardization of communication protocol, which introduces a new radio access technology (E-UTRAN, aka LTE (Long Term Evolution)), together with a new architecture for the IP core- and service network; the Enhanced Packet System (EPS). The latter work is also known as the System Architecture Evolution (SAE). This work also includes provisions to connect non-3GPP access technologies with the EPS.

In 3GPP TS 23.401 (V8.0.0) and TS 23.402 (V8.0.0) there are concepts and procedures to support User Equipment (UE) connectivity to a default Packet Data Network (PDN), meaning that an Access Point Name (APN) is provided by the Home Subscriber System (HSS) or the UE at initial attach, and to allow the UE to establish additional PDN connections towards APNs provided by the UE.

The types of terminals that this explicitly applies to are:
- An "integrated" UE, i.e. the cellular radio and the application processor hosting the IP stack and applications are tightly integrated in one device, e.g. a mobile phone.
- A "split" UE, i.e. cellular radio is not tightly integrated with the device hosting the IP stack and applications, e.g. a laptop with a plug-in card.

One scenario for which there are no explicit provisions in the standards documents is this case:
- Using an "integrated" UE as an access point from another device, or "terminal equipment" (TE) (e.g. PDA or laptop) that does not contain the desired access technology itself.

Using a mobile phone as an access point from an external TE (Terminal Equipment), over e.g. IrDA, Bluetooth, USB, or similar local connectivity technologies, might at first glance be seen as a special case of a "split UE".

The TE (e.g. laptop) uses standard IP parameter assignment methods towards the UE, depending on the type of the local connection; for example, DHCP over links emulating Ethernet, or IPCP when using PPP.

However, this is not trivial if the end user wants to use an application in the UE (i.e. mobile phone) that requires Internet Protocol (IP) connectivity at the same time as IP connectivity is provided for a TE. This will be a common scenario for UE:s supporting Packet Switched (PS) only technologies like E-UTRAN.

When using IP connectivity from a TE that is connected to a network via an "integrated" UE, what APN might be used for the TE? In current 3GPP network/service deployments, operators sometime require certain services to use special APNs. But except for special cases where the TE user wishes to gain access to some very special APN, e.g. representing a corporate network, it can be expected that the TE user is happy as long as the APN provides Internet connectivity. In EPS terms, giving the TE access to the default PDN should be the normal case.

To summarize the APN discussion, in the normal case, it can be expected that PDN connectivity for TE(s) is made using the same APN as the default one being used in the UE itself.

This means that there has to be a way to either share one PDN connection from the UE, or to set up multiple PDN connections to the same APN, in order to give IP connectivity to a TE.

### Problems with existing solutions

The PDP context concept and procedures as defined before Release 8 allows multiple "primary" contexts with no restriction regarding which APN is used, i.e., the same APN can be used for multiple contexts. This allows the UE to instantiate one PDP context for its own IP connectivity, then another PDP context when a TE wants IP connectivity.

The PDN connectivity service as defined for the EPS does currently have the same feature when the PDN Connectivity service is provided using GTP. Note that in earlier 3GPP releases, and for GERAN/UTRAN in Release 8, there is the PDP context concept, which corresponds closely to the PDN connection concept in the EPS.

The PDN connectivity service as defined for the EPS when PMIP is used does not currently have the same flexibility, i.e. multiple PDN connections can be established, but only towards different APNs. One reason is that the APN together with the UE identity is currently used as a session identifier in different network entities:
- For PMIP-based interfaces, the PDN GW treats each combination of {UE ID, APN} as a separate connection and will assign a new IP address to each connection.
- The PCC architecture for the PMIP-based architecture use in certain scenarios the {UE ID, APN}-tuple as an identifier for a session.

If there are multiple PDN connections to the same APN, the 2-tuple {UE ID, APN} cannot be used to un-ambiguously identify a PDN connection.

Possible existing, or alternative, solutions are:
1. One possible solution is to implement NAT router functionality in the UE. This would allow one PDN connection to be shared, by having the UE allocate a private IP address to external TE(s), and then through Network Address Translation / Protocol Translation make TCP/UDP/IP traffic from the TE appear to come from the UE as seen by the network.

Why is NAT routing in the UE undesirable?
- UE complexity - NAT in itself is not trivial, and comes with list of Application Layer Gateways (ALGs) to handle NAT traversal for a set of IP applications that otherwise break.
- IP transmission throughput is likely to be degraded, and UE battery consumption will be negatively affected by increased processing load.
- End user impact - where ever there is a NAT, there is usually a management interface to configure NAT options (e.g. mapping external ports to ports on internal IP-address/port pairs).

As a complement the UE will likely need to support the UPnP profile for IP Gateways (to allow PC applications to configure the NAT automatically) - with additional complexity impact.
2. Another possible solution is to amend the EPS standards to allow multiple PDN connections regardless of APN also when PMIP is used.

This would require updates in 3GPP specifications for PMIP-based S5/S8 for 3GPP accesses. In order to provide support for multiple PDN connections to the same APN also when the UE is using non-3GPP accesses, similar updates would be needed for PMIP-based S2a/S2b interfaces. Thus, fixing the problem in the core should be possible, but with some effort, and with impact on several nodes in the EPS.

To conclude, it is desirable to avoid NAT routing in UEs, and to keep backward compatibility with the PDP context capabilities before 3GPP Release 8.

### SUMMARY

It is an object of the present invention to provide a solution for multiple PDN connections while at the same time reducing the problems with the existing solutions mentioned above.

The present invention introduces a tag in an APN string when activating additional PDN connections. This tagging is proposed to be done by appending an identifier, e.g. a semicolon and a sequence number, to the original APN string. The tagging can either be done by the UE when requesting the additional PDN connection or by an entity in the NW, e.g. an access gateway.

This is provided in a number of aspects of the present invention, in which a first is a communication node for providing multiple Packet Data Network, PDN, connections towards one Access Point Name, APN, in a telecommunications network. The communication node comprises a processor, a memory, and a communication interface for communication with the telecommunications network, wherein the processor is arranged to execute instructions stored in the memory for inserting a tag, associated with a PDN connection of said multiple PDN connections, in an Access Point Name ,APN, string transmitted over the telecommunications network in an Internet Protocol based communication link and where the tag is arranged to uniquely distinguish the PDN connection from other of said multiple PDN connections, and thereby support multiple PDN connections towards the one APN.

The node may be one of a user equipment (UE), a radio network node, or a core network node. The tag may comprise a divisor and a unique string of characters; the divisor may comprise a semicolon and the unique string of characters may comprise a sequence number.

The radio network node may be arranged to receive a new PDN connection request from a UE and to tag the APN in relation to receiving the new PDN connection request or the UE may be arranged to insert the tag in relation to sending a request for a new PDN connection setup.

Another aspect of the present invention is provided, a method for providing multiple Packet Data Network, PDN, connections towards one Access Point Name, APN, in a telecommunication network, comprising the steps of:
including in an APN string a tag for each PDN connection of said multiple PDN connections, distinguishing each PDN connection from other of said multiple PDN connections in an Internet Protocol based communication link, where the tag is arranged to comprise a unique identifier and thereby support multiple PDN connections towards the one APN.

Yet another aspect of the present invention is provided, a system for providing multiple Packet Data Network, PDN, connections towards one Access Point Name, APN, in a telecommunications network, comprising:
- a communication device comprising a processing unit, a memory unit and at least one communication interface;
- at least one terminal equipment in communication with the communication device on the at least one communication interface;
wherein the communication device is arranged to execute instructions stored in a memory for inserting a tag associated with an established PDN connection of said multiple PDN connections in an access point name APN string, transmitted over the network in an Internet Protocol based communication link and where the tag is arranged to uniquely distinguish the PDN connection from other of said multiple PDN connections and thereby support multiple PDN connections towards the one APN.

Furthermore, an infrastructure node for providing multiple Packet Data Network, PDN, connections towards one Access Point Name, APN, is provided in a telecommunications network, comprising
- a processor;
- a memory;
- a communication interface for communication with the telecommunications network:
wherein the processor is arranged to execute instructions stored in the memory for extracting a unique tag associated with a PDN connection of said multiple PDN connection, transmitted over the network in an Internet Protocol based communication link received on the communication interface and where the tag is arranged to unique in an APN string, distinguish a specific PDN connection from other of said multiple PDN connections associated with the APN and thereby support multiple PDN connections towards the one APN.

This and other aspects of the invention will be apparent from and elucidated with reference to the embodiments described hereinafter.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically an embodiment of a network system according to the present invention;
Fig. 2A and B illustrates schematically nodes according to the present invention;
Fig. 3 illustrates schematically in a block diagram a method according to the present invention;
Fig. 4 illustrates schematically a system according to the present invention; and
Fig. 5 illustrates schematically a communication device according to the present invention.

### DETAILED DESCRIPTION

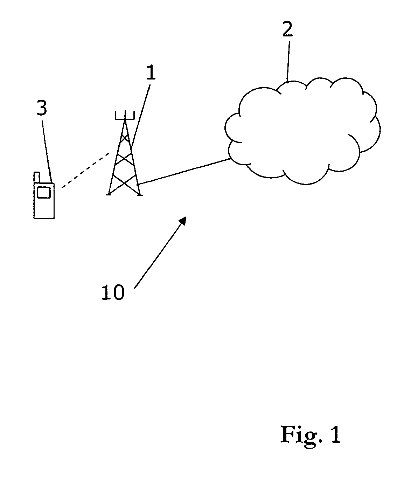

In Fig. 1 reference numeral 10 generally indicate a network according to the present invention, comprising at least one base station 1 or similar wireless access gateway (e.g. access point) to an infrastructure communication network 2. The base station 1 is arranged to communicate with user equipment 3 (UE) wirelessly and with an infrastructure network 2. The base station 2 may comprise one antenna or a plurality of antennas. The core infrastructure communication network 2 comprises several different entities depending on communication protocol.

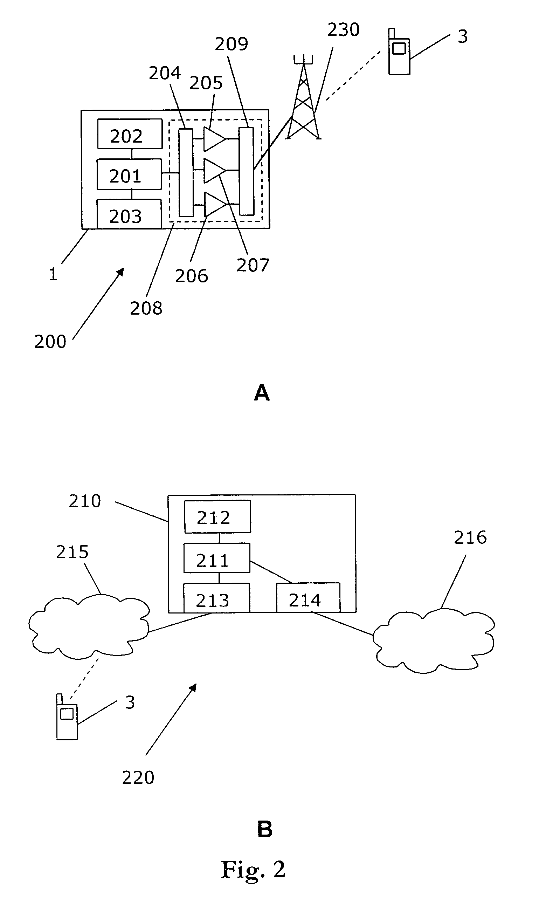

In Fig. 2A a node device 1 (e.g. a base station) implementing the solution according to the present invention is shown. The device may comprise at least one processing unit 201, at least one memory unit 202, and at least one communication interface 203. Furthermore, the device comprises a transceiver portion 208 for receiving and transmitting radio signals via an antenna 230. The transceiver portion may comprise AD/DA unit(s) 204, at least one power amplifier 205, 206, 207, and optionally a switch/multiplexer 209. The processing unit is arranged to run code for communication control and data traffic. The processing unit 201 may comprise for instance a microprocessor, a Digital Signal Processor (DSP), an ASIC (application Specific Integrated Circuit), or an FPGA (Field programmable gate array) or a combination of these. The memory unit 202 may comprise any suitable type of memory (volatile and/or non-volatile) such as e.g. RAM, ROM, EEPROM, Flash, and hard disk. The communication interface 203 connects the device 1 to the infrastructure network 2 (See Fig. 1). Other communication equipment may be present as well depending on the type of wireless communication protocol/standard used. However, the RAN device may comprise any other node part of the RAN where it is suitable to implement the solution according to the present invention, e.g. RNC, BTS, BSC, or eNodeB.

It should be noted that the transceiver portion 208 may be configured in different ways depending on radio technology and/or communication protocol used as understood by the skilled person.

Fig. 2B shows a second embodiment of a network 220 according to the present invention comprising an infrastructure node 210 part of a core infrastructure network implementing the solution according to the present invention. The node 210 may comprise a processing unit 211 controlling communication data (control and/or user plane communication data). The node 210 further comprise at least one memory unit (volatile and/or non-volatile) 212 as understood by the skilled person and at least one communication interface 213, 214. For example, the communication interface may comprise one access interface 213 to an access network 215 (i.e. downstream towards the UE 3) and one infrastructure network interface 214 (i.e. upstream away from the UE) towards an infrastructure network 216 (e.g. the Internet or other communication networks). It should be noted that the access network interface and infrastructure network interface may be using the same physical communication interface (e.g. Ethernet, ATM, or similar communication interface). The infrastructure node may comprise an access gateway, an SGSN, a GGSN, or a separate entity located in the core network.

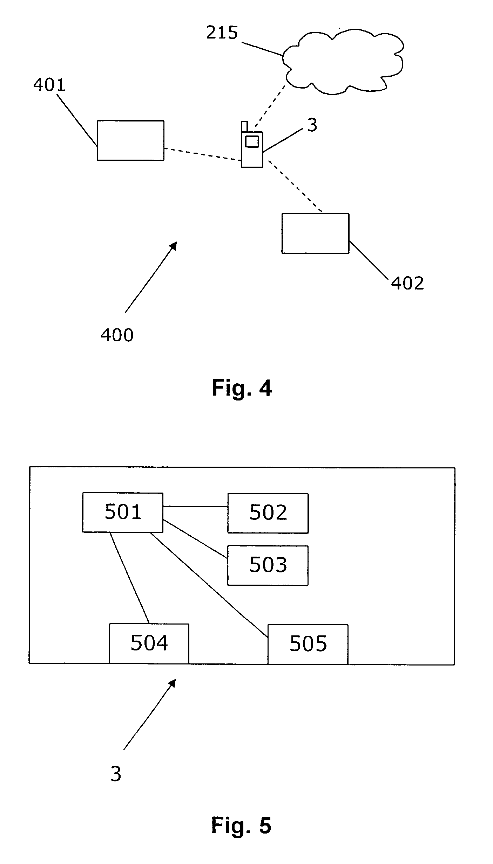

Fig. 4 illustrates a system 400 with a communication device, such as a mobile phone 3 or similar device, with a wireless communication interface towards an infrastructure network 215. In one embodiment of the present invention, at least one terminal equipment (TE) 401, 402 is connected to the communication device 3 using any suitable local communication interface. The local communication interface may be either wired or wireless. In accordance with the configuration of the present invention, the TE may be requesting an IP connection to the infrastructure network via the communication device 3 and thus a packed data network (PDN) connection is to be established; however, in order to provide a solution for multiple PDN connections, the present invention bypass the problem that multiple PDN connections with the same Access Point Name (APN) is not supported on certain reference points in the Evolved Packet System (EPS), by tagging an APN string when activating additional PDN connections. The tagging may either be done by the communication device, e.g. UE 3 when requesting the additional PDN connection or by an infrastructure entity in the network, NW 215. The TE 401, 402 may be connected to the communication device 3 using one or several suitable communication protocols/methods such as for instance Bluetooth, Wireless Local Area network (WLAN), USB, IrDA, PCMCIA, RS-232, SPI (Serial Peripheral Interface), and so on.

In one other embodiment the communication device 3 is not connected to a number of TE but there are a number of separate applications running in the communication device that each requests a separate connection to the infrastructure network, thus potentially requesting several PDN connections from the same communication device 3.

Fig. 5 illustrates a communication device 3 according to the present invention with a processing unit 501 operating instruction sets stored in a memory 502 (volatile or non-volatile). The processing unit communicates with the infrastructure network 215 using a wireless access network interface 504 and with optional terminal equipment as shown in relation to Fig. 4 with a local communication interface 505 (wired or wireless). The communication device may also comprise a user interface 503.

In one embodiment the tagging may be done by appending a divisor character, e.g. a semicolon, and a unique identity, e.g. a sequence number, to the original APN string. The tagging may be formatted in many different ways, as long as it is possible for the UE and NW entities to uniquely separate the tagging from the rest of the APN. The tag format is preferably standardized to allow interoperability between UEs and NW entities from different vendors. Thus, over reference points where PDN connections are identified by UE identity and APN (only), multiple PDN connections to the same actual APN may be disambiguated by the tagging of the APN string. Nodes that need to understand the APN (e.g. for routing/lookup purposes) can easily strip away the tag.

The tagging is preferably done by an entity that has knowledge of all active PDN connections for a given UE. For instance, the UE itself may do the tagging. When the UE wants to request a new PDN connection to an APN where there already is an active PDN connection, the UE tags the APN with a new unique identity identifying the connection, e.g. a sequence number.

In another embodiment, an access GW, e.g. MME, SGSN, S-GW (Serving Gateway), ePDG (evolved Packet Data Gateway) or non-3GPP GW, does the tagging. Since the access GW knows about all active PDN connections for a given UE it may tag the APN appropriately when a new PDN connection request is received from the UE.

According to the current IEEE TS 23.402 draft, the APN and PDN GW identity/address for all active PDN connections of a UE are stored in HSS. This is to enable preservation of the PDN GW, for each PDN connection, at mobility between accesses. When tagged APNs are used, the tag has also to be stored together with the APN and PDN GW identity/address in the Home Subscriber Server (HSS). This may however be made transparent to the HSS if the tagged APNs are stored.

In case of initial attach, the APN is not necessarily provided by the UE. Instead a default APN as provided by the HSS may be used. In order to allow the UE to perform appropriate tagging in this case, the NW should inform the UE about the APN used for initial attach (default APN). Note: the current draft 23.401 already specifies that the NW shall inform the UE about the APN used for the initial attach.

The main advantage of the solution according to the present invention is the avoidance of Network Address Translation (NAT) routing in UEs, and that backwards compatibility with the PDP context concept is enhanced.

Another advantage is that impact on Proxy Mobile IP (PMIP) is avoided. This is an advantage since it may be difficult and/or requiring long lead times to put 3GPP-specific requirements on IETF protocols.

Yet another advantage is that impact on Policy and Charging Control (PCC) architecture for PMIP is avoided. PCC can maintain the possibility to use {UE ID, APN} as session identifier.

As a solution to supporting multiple PDN connections towards one APN in the EPS, the invention has the least impact on the EPS as a whole, and particularly no impact on the protocols used over various mobility reference points (S5/S8, S2a, S2b, S2c) or PCC reference points (Gxx, Gx).

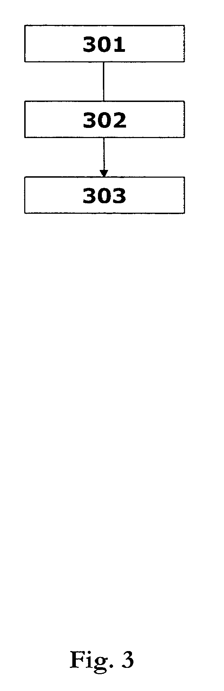

One embodiment for providing a tag to an appropriate node in the network according to the present invention may be shown in relation to Fig. 3:
301. Controlling all active PDN connections;
302. In relation to opening a new PDN connection amending the APN to include a tag for , e.g. a separator and a sequence number;
303. Using the tag for distinguishing connections from each other.

It should be noted that even though the present invention has been exemplified using user equipment and access GW, other entities with similar operational features may be used within the scope of the invention.

The present invention may also be realized as processor readable instructions stored in a processor readable storage medium.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### DEFINITIONS AND ABBREVIATIONS

- APN: Access Point Name
- BSC: Base Station Controller
- BTF: Bearer Translation Function
- BTS: Base Transceiver Station
- DB: Database
- EPC: Evolved Packet Core
- EPS: Evolved Packet System
- E-UTRAN: Evolved UTRAN
- FA: Foreign Agent
- GGSN: Gateway GPRS Support Node
- GPRS: General Packet Radio Service
- GW: Gateway
- HSS: Home Subscriber Server
- IP: Internet Protocol
- IPCP: Internet Protocol Control Protocol
- HA: Home Agent
- HLR: Home Location Register
- IEEE: Institute of Electrical and Electronics Engineers
- LTE: Long term Evolution
- MME: Mobility Management Entity
- MS: Mobile Station
- NAS: Non-Access Stratum
- PCC: policy and charging control
- PDN: Packet Data Network
- PDP: Packet Data Protocol
- PMIP: Proxy Mobile IP
- PPP: Point-to-Point Protocol
- QoS: Quality of service
- RAN: Radio Access Network
- RAU: Routeing Area Update
- RNC: Radio Network Controller
- SGSN: Serving GPRS Support Node
- TA: Tracking Area
- TAU: Tracking Area Update
- TE: Terminal Equipment
- UE: User Equipment
- UTRAN: UMTS Terrestrial Radio Access Network
- VLR: Visitor Location Register
- WAN: Wide Area Network
- WLAN: Wireless Local Area Network
- WPAN: Wireless Personal Area Network

### REFERENCES

Incorporated by reference into this document
[1] 3GPP TS 23.401 (draft v 8.0.0): GPRS enhancements for E-UTRAN access
[2] 3GPP TS 23.402 (draft v 8.0.0) Architecture enhancements for non-3GPP accesses
[3] Proxy Mobile IPv6, Internet Draft (draft-ietf-netlmm-proxymip6-07.txt)

It should be noted that other protocol standards may be used as understood by the skilled person.

## Claims

1. A communication node for providing multiple Packet Data Network, PDN, connections towards one Access Point Name, APN, in a telecommunications network (2), comprising
- a processor(501);
- a memory (502);
- a communication interface (504) for communication with the telecommunications network;
**characterized in that**
the processor (501) is arranged to execute instructions stored in the memory for inserting a tag, associated with a PDN connection of said multiple PDN connections, in an Access Point Name, APN, string transmitted over the telecommunications network in an Internet Protocol based communication link, where the tag is arranged to uniquely distinguish the PDN connection from other of said multiple PDN connections, and thereby support multiple PDN connections towards the one APN.

2. The communication node according to claim 1, wherein the communication node is one of a user equipment (3), UE, a radio network node (1), or a core network node (210).

3. The communication node according to claim 1, wherein the tag comprise a divisor and a unique string of characters.

4. The communication node according to claim 3, wherein the divisor comprise a semicolon.

5. The communication node according to claim 3, wherein the unique string of characters comprise a sequence number.

6. The communication node according to claim 2 and embodied as radio network node (1), wherein the radio network node (1) is arranged to receive a new PDN connection request from a UE and to tag the APN in relation to receiving the new PDN connection request.

7. The communication node according to claim 2 and embodied as UE (3), wherein the UE (3) is arranged to insert the tag in relation to sending a request for a new PDN connection setup.

8. The communication node according to claim 2, wherein the UE (3) is further arranged with a local communication interface (505) towards external local terminal equipment (401, 402).

9. The communication node according to claim 8, wherein the terminal equipment (401, 402) is one of a PDA or a laptop.

10. The communication node according to claim 2, wherein the radio network node (1) is one of RNC, BTS, BSC, or eNodeB.

11. A method for providing multiple Packet Data Network, PDN, connections towards one Access Point Name, APN, in a telecommunications network, **characterized in that** the method comprising the step of:
- including in an APN string a tag for each PDN connection of said multiple PDN connections,
distinguishing each PDN connection from other of said multiple PDN connections in an Internet Protocol based communication link, where the tag is arranged to comprise a unique identifier,
and thereby support multiple PDN connections towards the one APN.

12. The method according to claim 11, where the unique identifier comprise a sequence number.

13. A system for providing multiple Packet Data Network, PDN, connections towards one Access Point Name, APN, in a telecommunications network (2), comprising:
a communication device (3) comprising a processing unit (501), a memory unit (502) and at least one communication interface (504, 505);
a t least one terminal equipment (401, 402) in communication with the communication device on the at least one communication interface;
**characterized in that**
the communication device (3) is arranged to execute instructions stored in a memory for inserting a tag associated with an established PDN connection of said multiple PDN connections in an Access Point Name, APN, string, transmitted over the telecommunication network in an Internet Protocol based communication link and where the tag is arranged to uniquely distinguish the PDN connection from other of said multiple PDN connections,
and thereby support multiple PDN connections towards the one APN.

14. An infrastructure node (1, 210) for providing multiple Packet Data Network, PDN, connections towards one Access Point Name, APN, in a telecommunications network (2), comprising
- a processor(201, 211);
- a memory (202, 212);
- a communication interface (208, 213, 214) for communication with the telecommunications network;
**characterized in that**
the processor is arranged to execute instructions stored in the memory for extracting a unique tag associated with a PDN, connection of said multiple PDN connections transmitted over the network in an Internet Protocol based communication link received on the communication interface where the tag is arranged to unique in an APN string, distinguish a specific PDN connection from other of said multiple PDN connections associated with the APN, and thereby support multiple PDN connections towards the one APN.

## Patentansprüche

1. Kommunikationsknoten zum Bereitstellen mehrerer Pakeldatennetz-Verbindungen, PDN, zu einem Zugangspunktnamen, APN, in einem Telekommunikationsnets (2), umfassend:
- einen Prozessor (501);
- einen Speicher (502);
- eine Kommunikationsschnittstelle (504) für Kommunikation mit dem Telekommunikationsnetz;
**dadurch gekennzeichnet, dass**
der Prozessor (501) angeordnet ist zum Ausführen von Anweisungen, die in dem Speicher gespeichert sind, zum Einfügen einer Kennzeichnung, die mit einer PDN-Verbindung der mehreren PDN-Verbindungen assoziiert ist, in eine Zugangspunktnamen-Zeichenfolge, APN, die über das Telekommumkationsnetz in einer Internetprotokoll basieren Kommunikationsverbindung übertragen wird, wobei die Kennzeichnung ungeordnet ist, um die PDN-Verbindung eindeutig von anderen der mehreren PDN-Verbindungen zu unterscheiden und **dadurch** mehrere PDN-Verbindungen zu dem einen APN zu unterstützen.

2. Kommunikationsknoten nach Anspruch 1, wobei der Kommunikationsknoten eines einer Benutzcrausrustung (3), UE, eines Funknetzknotens (1) oder eines Kernnetzknotens (210) ist.

3. Kommunikationsknoten nach Anspruch 1, wobei die Kennzeichnung einen Teiler und eine eindeutige Folge von Zeichen umfasst.

4. Kommunikationsknoten nach Anspruch 3, wobei der Teiler ein Semikolon umfasst.

5. Kommunikationsknoten nach Anspruch 3, wobei die eindeutige Folge von Zeichen eine laufende Nummer umfasst.

6. Kommunikationsiknoten nach Anspruch 2 und ausgeführt als Funknetzknoten (1), wobei der Funknetzknoten (1) angeordnet ist, um eine neue PDN-Verbindungsanforderung von einer UE zu empfangen und um den APN im Hinblick auf Empfangen der neuen PDN-Verbindungsanforderung zum kennzeichnen.

7. Kommunikationsknoten nach Anspruch 2 und ausgeführt als UE (3), wobei die UE (3) angeordnet ist, um die Kennzeichnung im Hinblick auf Senden einer Anforderung für eine neue PDN-Verbindungseinrichtung einzufügen.

8. Kommunikationsknoten nach Anspruch 2, wobei die UE (3) weiterhin mit einer lokalen Kommunikationsschnittsteile (505) zu externer lokaler Endgeräteausrüstung (401, 402) angeordnet ist.

9. Kommunikationsknoten nach Anspruch 8, wobei die Endgeräteausrüstung (401, 402) eines eines PDA oder eines Laptops ist.

10. Kommunikationsknoten nach Anspruch 2, wobei der Funknetzknoten (1) eines von RNC, BTS, BSC oder eNodeB ist.

11. Verfahren zum Bereitstellen mehrerer Paketdatennetz-Verbindungen, PDN, zu einen Zugangspunktnamen, APN, in einem Telekommunikationsnetz, **dadurch gekennzeichnet**, das das Verfahren den folgenden Schritt umfasst;
- Einschließen, in einer APN-Zeichenfolge, einer Kennzeichnung für jede PDN-Werbindung für die mehreren PDN-Verbindungen,
Unterscheiden jeder PDN- Verbindung von anderen der mehreren PDN-Verbindungen in einer Internetprotokoll-basierten Kommunikationsverbindung, wobei die Kennzeichnung angeordnet ist, um eine eindeutige Identifizierung zu umfassen,
und **dadurch** mehrere PDN-Verbindungen zu dem einen APN zu unterstützten.

12. Verfahren nach Anspruch 11, wobei die eindeutige Identifizierung eine laufende Nummer umfasst.

13. System zum Bereitstellen mehrerer Paketdatennetz-Verbindungen, PDN, zu einem Zugangspunktanamen, APN, in einem Telekommunikatiörisnetz (2), umfassend:
- eine Kommunikationsvorrichtung (3), umfassend eine Verarbeitungseinheit (501), eine Speichereinheit (502) und mindestens eine Kommunikationsschnittelle (504, 505);
- mindestens eine Endgeniteausrüstung (401, 402) in Kommunikation mit der Kommunikationsvorrichtung über die mindestens eine Kommunikationsschnittstelle;
**dadurch gekennzeichnet, dass**
die Kommmkationsvorrichtung (3) angeordnet ist zum Ausführen von Anweisungen, die in einem Speicher gespeichert sind, zum Einfügen einer Kennzeichnung, die mit einer hergestellten PDN-Verbindung der mehreren PDN-Verbindungen assoziiert ist, in eine Zugangspunktnamen-Zeichenfolge, APN, die über das Telekommunikationsnetz in einer Internetprotokoll-basierten Kommumkationsverbindung übertragen wird, und wobei die Kennzeichnung angeordnet ist, um die PDN-Verbindung eindeutig von andern der mehreren PDN-Vsrbindungen zu unterscheiden,
und **dadurch** mehrere PDN-Verbindungen zu dem einen APN zu unterstützen.

14. Infrastrukturknoten (1, 201) zum Bereitstellen mehrerer Paketdatennetz-Verbindungen, PDN, zum einem Zugangspunktnamen, APN, in einem Telekommunikationsnetz (2), umfassend
- einen Prozessor (201, 211) ;
- einen Speicher (202, 212);
- eine Kommunikationsschnittstelle (208, 213, 214) für Kommunikation mit dem Telekommunikationsnetz;
**dadurch gekennzeichnet, dass**
der Prozessor angeordnet ist zum Ausführen von Anweisungen, die in dem Speicher gespeichert sind, zum Extrahieren einer eindeutigen Kennzeichnung, die mit einer PDN-Verbindung der mehreren PDN-Verbindungen assoziiert ist, in einer APN-Zeichenfolge, die über das Netz in einer Internetprotokoll-basierten Kommumkationsverbindung übertragen wird, die über die Kommunikationsschnittstelle empfangen wird, wobei die Kennzeichnung angeordnet ist, um eine spezifische PDN Verbindung eindeutig von anderen der mehreren PDN-Verbindungen, die mit dem APN assoziiert sind, zu unterscheiden und **dadurch** mehrere PDN-Verbindungen zu dem einen APN zu unterstützen.

## Revendications

1. Noeud de communication destiné à fournir de multiples connexions de réseau de données en paquets, PDN, vers un nom de point d'accès, APN, dans une réseau de télécommunication (2), comprenant :
- un processeur (501) ;
- une mémoire (502) ;
- une interface de communication (504) pour la communication avec le réseau de télécommunication ;
**caractérisé en ce que**
le processeur (501) agencé de manière à exécuter des instructions stockées dans la destinées à insérer une étiquette, associée à une connexion de réseau PDN desdites multiples connexions de réseau PDN, dans une chaîne de noms de point d'accès APN transmise sur le réseau de dans une liaison de communication à base de protocole Internet, où l'étiquette est agencée de manière à distinguer de manière unique la connexion PDN d'autres desdites multiples connexions de réseau PDN, et par conséquent à prendre en charge de multiples connexions de réseau PDN vers ledit un nom APN.

2. Noeud de communication selon la revendication 1, dans lequel le noeud de communication est l'un parmi un équipement utilisateur (3), UE, un noeud de réseau radio (1), ou un noeud de réseau fédérateur (210).

3. Noeud de communication selon la revendication 1, dans lequel l'étiquette comporte un élément séparateur et une unique chaîne de caractères.

4. Noeud de communication selon la revendication 3, dans lequel l'élément séparateur comporte un point-virgule.

5. Noeud de communication selon la revendication 3, dans lequel l'unique chaîne de caractères comporte un numéro de séquence.

6. Noeud de communication selon la revendication 2, et intégré en tant que noeud de réseau radio (1), dans lequel le noeud de réseau radio (1) est agencé de manière à recevoir une nouvelle demande de connexion de réseau PDN d'un équipement UE et à étiqueter le nom APN relativement à la réception de la nouvelle demande de connexion de réseau PDN.

7. Noeud de communication selon la revendication 2, et intégré en tant qu'équipement UE (3), dans lequel l'équipement UE (3) est agence de manière à insérer l'étiquette relativement à l'envoi d'une demande de nouvel établissement de connexion de réseau PDN.

8. Noeud de communication selon la revendication 2, dans lequel l'équipement UE (3) est en outre agencé avec une interface de communication locale (305) vers un équipement terminal local externe (401, 402).

9. Noeud de communication selon la revendications, dans lequel l'équipement terminal (401, 402) est l'un parmi un assistant numérique personnel ou un ordinateur portable.

10. Noeud de communication selon la revendication 2, dans lequel le noeud de réseau radio (1) est l'un parmi un contrôleur RNC, une station BTS, un contrôleur BSC, ou un noeud « eNodeB ».

11. Procède destiné à fournir de multiples connexions de réseau de données en paquets, PDN, vers un nom de point d'accès, APN, dans un réseau de télécommunication, **caractérisé en ce que** le procède comporte les étapes ci-dessous consistant à :
- inclure, dans une chaîne de noms APN, une étiquette pour chaque connexion de réseau PDN desdites multiples connexions de réseau PDN ;
- distinguer chaque connexion d'autres desdites multiples connexions de réseau PDN dans une liaison de communication à base de protocole Internet, où l'étiquette est agencée de manière à comprendre un identifiant unique,
et par conséquent à prendre en charge de multiples connexions de réseau PDN vers ledit un nom APN.

12. Procédé selon la revendication 11, où l'identifiant unique comporte un numéro de séquence.

13. Système destiné à fournir de multiples connexions de réseau de données en paquets, PDN, vers un nom de point d'accès, APN, dans un réseau de télécommunication, comprenant :
- un dispositif de communication (3) comprenant une unité de traitement (501), une unité de mémoire (502) et au moins une interface de communication (304, 505) ;
- au moins un équipement terminal (401 402) en communication avec le dispositif de communication sur ladite au moins une interface de communication ;
**caractérisé en ce que**
le dispositif de communication (3) est agencé de manière à exécuter des instructions stockées dans une mémoire, destinées à insérer une étiquette, associée à une connexion de réseau PDN établie desdites multiples connexions de réseau PDN, dans une chaîne de noms de point d'accès APN transmise sur le réseau de télécommunication dans une liaison de communication baste de protocole Internet, et où l'étiquette est agencée de façon à distinguer de manière unique la connexion de réseau PDN d'autres desdites multiples connexions de réseau PDN,
et par conséquent à prendre en charge de multiples connexions de réseau PDN vers ledit un nom APN.

14. Noeud d'infrastructure (1, 210) destine à fournir de multiples connexions de réseau de données en paquets, PDN, vers un nom de point d'accès, APNs, dans un réseau de télécommunication (2), comprenant :
- un processeur (201, 211) ;
- une mémoire (202, 212) ;
- une interface de communication (208, 213, 214) pour la communication avec le réseau de télécommunication ;
**caractérise en ce que**
le processeur est agence de manière à exécuter des instructions stockées dans la mémoire en vue d'extraire une unique étiquette, associée à une connexion de réseau PDN desdites multiples connexions de réseau PDN, dans une chaîne de noms APN transmise sur le réseau dans une liaison de communication à bise de protocole Internet reçue sur l'interface de communication, où l'étiquette est agencée de façon à distinguer de manière unique une connexion de réseau PDN spécifique d'autres desdites multiples connexions de réseau PDN associées au nom APN, et par conséquent à prendre en charge de multiples connexions de réseau PDN vers ledit un nom APN.
